(19) Europäisches Patentamt
European Patent Office
Office européen des brevets

(11) **EP 3 024 075 B1**

(12) **EUROPEAN PATENT SPECIFICATION**

(45) Date of publication and mention of the grant of the patent:
**05.09.2018 Bulletin 2018/36**

(21) Application number: **14826882.4**

(22) Date of filing: **15.07.2014**

(51) Int Cl.:
*H01M 8/02* (2016.01)    *H01M 8/18* (2006.01)
*H01M 8/0271* (2016.01)    *H01M 8/04276* (2016.01)

(86) International application number:
**PCT/KR2014/006366**

(87) International publication number:
**WO 2015/009017 (22.01.2015 Gazette 2015/03)**

(54) **REDOX FLOW BATTERY OR FUEL CELL STACK PROVIDED WITH SEAL FOR PREVENTING SHUNT CURRENT LOSS**

REDOX-DURCHFLUSS-BATTERIE ODER BRENNSTOFFZELLENSTAPEL MIT DICHTUNG ZUR VERHINDERUNG VON LECKSTROMVERLUSTEN

BATTERIE OU EMPILEMENT DE PILES À COMBUSTIBLE À FLUX REDOX COMPRENANT UN JOINT POUR EMPÊCHER LES PERTES PAR COURANT DE DÉRIVATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2013 KR 20130083212**

(43) Date of publication of application:
**25.05.2016 Bulletin 2016/21**

(73) Proprietor: **H2 Inc.**
**Daejeon 305-500 (KR)**

(72) Inventors:
• **HAN, Chang Hoon**
**Daejeon 301-213 (KR)**
• **HAN, Shin**
**Daejeon 305-761 (KR)**
• **HUH, Jee Hyang**
**Daejeon 305-752 (KR)**

(74) Representative: **Zardi, Marco**
**M. Zardi & Co. SA**
**Via Pioda 6**
**6900 Lugano (CH)**

(56) References cited:
**CN-A- 101 587 959        JP-A- 2007 299 550**
**JP-B2- H 084 010        JP-B2- 3 143 613**
**KR-A- 20090 078 550        US-A1- 2006 110 649**
**US-A1- 2013 089 767**

**Description**

TECHNICAL FIELD

The present invention relates to a seal used for preventing leakage of an electrolyte from a redox flow battery or a fuel cell stack.

BACKGROUND ART

A redox flow battery is one of the core products closely associated with a new renewable energy, greenhouse gas mitigation, a secondary battery, and a smart grid, which have recently aroused the greatest interest around the globe, and a fuel cell is a new energy generation source alternate to fossil fuels and a product, a market of which rapidly expands around the globe. Recently, most energy has been acquired from fossil fuels, but there are limitations in that energy efficiency is low, and the use of the fossil fuels exerts on a seriously bad influence on an environment, such as air pollution, acid rain, and global warming.

In order to solve the limitations due to the use of the fossil fuels, high expectations are being placed on the new renewable energy and the fuel cell. In Korea and around the glove, interest in the new renewable energy rises, and research is actively conducted on the new renewable energy.

A new renewable market reaches a maturity stage inside and outside of Korea, but there is a limitation in that an amount of an energy generated is significantly changed according to an environmental effect such as a time and weather due to the characteristics of a renewable energy. Accordingly, in order to stabilize the new renewable energy, there is a need for spread of an energy storage system (ESS) storing the generated renewable energy, and a redox flow battery has received attention as the mass energy storage system.

Many technologies have been developed on the fuel cell due to eco-friendly characteristics and an unlimited resource rate, and fuel cell vehicles, generators, heating systems using the fuel cell have been developed and sold. However, up to now, the fuel cell is difficult to manufacture, assemble, and maintain.

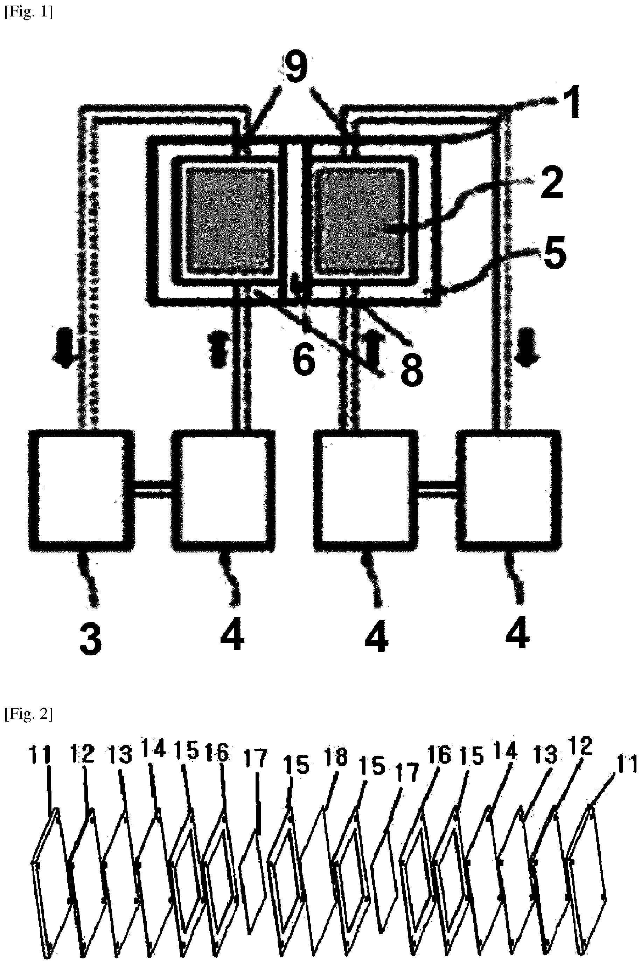

As illustrated in FIG. 1, a general structure of a redox flow battery, to which the present invention is applied, includes a stack 1 formed by stacking cells in which an electrochemical reaction occurs, a tank 3 storing an electrolyte, and a pump 4 supplying the electrolyte from the tank storing the electrolyte to the stack.

FIG. 2 illustrates a simplified structure of the stack 1, and FIG. 2 illustrates an end plate 11-an insulating plate 12-a current plate 13-a bipolar plate 14-a gasket 15-an electrode 17-a flow frame 16-a gasket 15-an ion exchange membrane 18-a gasket 15-an electrode 17-a flow frame 16-a gasket 15-a bipolar plate 14-a current plate 13-an insulating plate 12-an endplate 11 from a left side. A unit cell includes the bipolar plate 14 to the bipolar plate 14, and generally, one stack is formed by stacking several ten to several hundred unit cells.

In the present invention, the term "plate" indicates configurations such as the end plate 11, the insulating plate 12, the current plate 13, the bipolar plate 14, and the flow frame 16, which constitute the stack 1 having a plate shape.

In order to prevent the leakage of the electrolyte, a seal 50 or the gasket 15 is disposed between components of the stack.

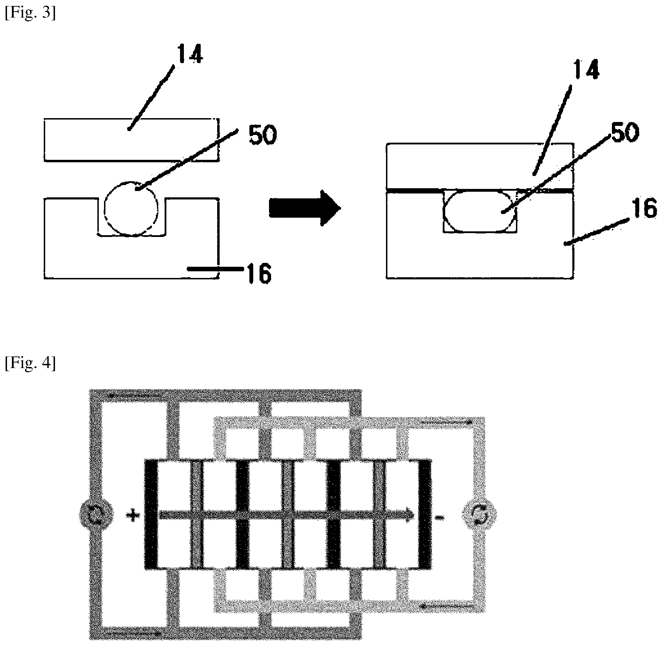

When the stack is assembled, the seal 50 is compressed to prevent the leakage of the electrolyte (see FIG. 3).

The seal 50 is mounted so as to be inserted into a groove formed in a contact surface of the plate such as the end plate 11, the insulating plate 12, the current plate 13, the bipolar plate 134, or the flow frame 16, which is stacked on and under the seal 50. A size of the groove is equal to or greater than a cross sectional area of the seal 50, and thus, after the seal 50 is compressed, the seal 50 is designed so as to fill an inside of the groove (see FIG. 3).

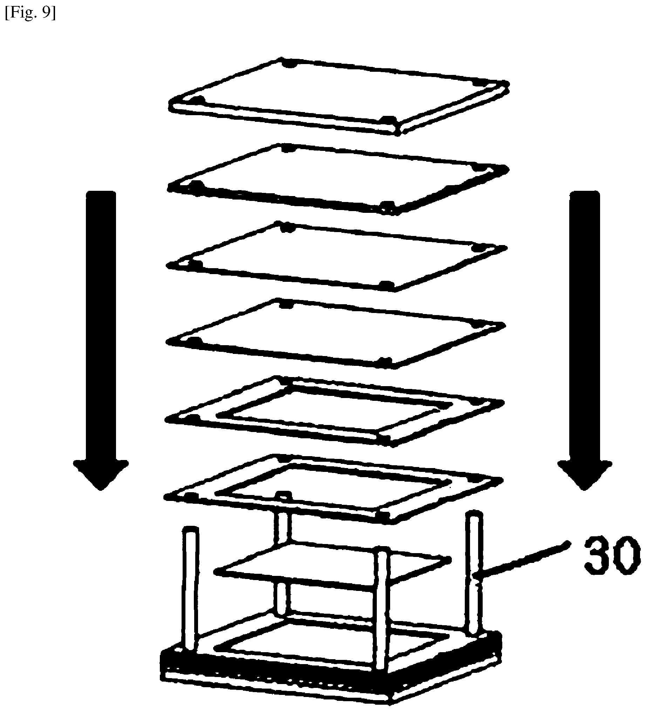

Generally, as illustrated in FIG. 9, the stack is assembled by vertically stacking the plates, the gasket, and the seal 50 constituting the plate on a ground surface.

However, during assembling the stack, a portion of the stack is moved, and in this case, since the seal 50 inserted into the groove of the lower surface in the plate is smaller than the groove, there have been inconvenience during assembling due to the separation of the seal 50 from the groove by gravity.

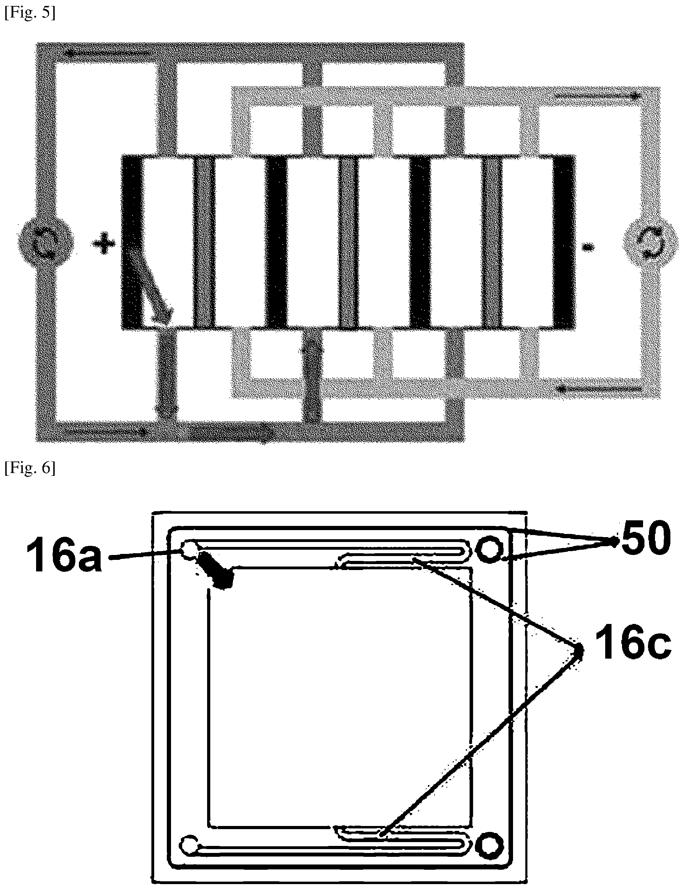

In addition, one of limitations in deteriorating performance of a redox flow battery is shunt current loss. The shunt current loss will be described with reference to FIGS. 4 and 5. FIG. 4 is a schematic diagram for describing a structure of a redox flow battery, which describes an ideal electron flow. The redox flow battery supplies electrons by using current plates or current collectors disposed at both ends of the stack, while the supplied electrons flow inside a cell, an electrochemical reaction occurs.

However, since the electrolyte is a material having high electrical conductivity and an internal resistance of the cell increases, electrons are transferred in an arrow direction of FIG. 5 through a flow hole having a relatively low resistance due to characteristics of electricity.

Therefore, when the stack is designed, it is necessary to prevent the shunt current loss.

In this regard, a seal is disclosed in Korean Patent Laid-Open Application No. 10-2013-0040826 entitled "MEMBRANE STACK FOR MEMBRANE-BASED PROCESS AND METHOD OF PRODUCING MEMBRANE FOR THE SAME", but the above-described problems are not solved.

D1 discloses a reactor assembly including a plurality of outer frames, a plurality of inner frames, and a rib and channel interlock system integrated in the plurality of outer frames and the plurality of inner frames. D4 discloses an electrode frame for an all-vanadium redox flow battery pile, which improves the utilization rate of membrane materials compared with the traditional battery pile and does not need perforation.

DETAILED DESCRIPTION OF THE INVENTION

TECHNICAL PROBLEM

An object of the present invention is to solve a problem that a seal inserted into a groove of a lower surface in a plate is separated from the groove by gravity during assembling

In addition, another object of the present invention is to prevent a shunt current loss that deteriorates performance of a redox flow battery.

TECHNICAL SOLUTION

The present invention relates to a redox flow battery or fuel cell stack assembled by stacking a plurality of plates, wherein a seal is disposed between the plurality of plates, and grooves is placed are formed only on surfaces facing upper portions of the plurality of plates at the time of assembling and are not formed on surfaces facing lower portions of the plurality of the plates, the seal being placed in the grooves.

According to the present invention, the seal may include a seal disposed along outsides of the plates between the plurality of plates.

In addition, the present invention relates to a redox flow battery or fuel cell stack assembled by stacking a plurality of plates, wherein a electrolyte flow channel is formed in some of the plurality of plates, and the plates in which the electrolyte flow channel is formed includes: a seal disposed along outsides thereof; and a seal that is disposed adjacent to the electrolyte flow channel.

According to the present invention, the electrolyte flow channel is formed so as to have overlapping portions when viewed from one direction, and the seal extends between the overlapping portions.

According to the present invention, the plates in which the electrolyte flow channel is formed may further include: an electrolyte passage in which the electrolyte flow channel is not formed; and a seal surrounding the electrolyte passage.

According to the present invention, the seal disposed along the outsides of the plates, the seal adjacent to the electrolyte flow channel, and the seal surrounding the electrolyte passage may be are integrally formed.

ADVANTAGEOUS EFFECTS OF THE INVENTION

According to the present invention, the groove is removed from a surface facing the lower portion of the plate adjacent to the seal and is formed only on a surface facing the upper portion thereof, and during assembling the stack, the seal is not allowed to follow the lower surface of the plate, thereby improving efficiency of assembling. In addition, the seal is formed at a position between lines of the electrolyte flow channel or adjacent to the electrolyte flow channel, thereby preventing the electrolyte from deviating from the electrolyte flow channel to prevent the shunt current loss.

DESCRIPTION OF THE DRAWINGS

FIG. 1 is a schematic diagram of a redox flow battery to which the present invention is applied.
FIG. 2 is an exploded perspective view of an existing redox flow battery.
FIG. 3 is a diagram for describing a state in which a seal is assembled between plates.
FIG. 4 is a schematic diagram for describing an ideal electron flow.
FIG. 5 is a schematic diagram of a stack, which describes an occurrence of shunt current loss.
FIG. 6 is a diagram for describing an electrolyte passage formed in a plate and an occurrence of shunt current loss.
FIG. 7 is a diagram for describing a state in which a seal is assembled, according to the present invention.

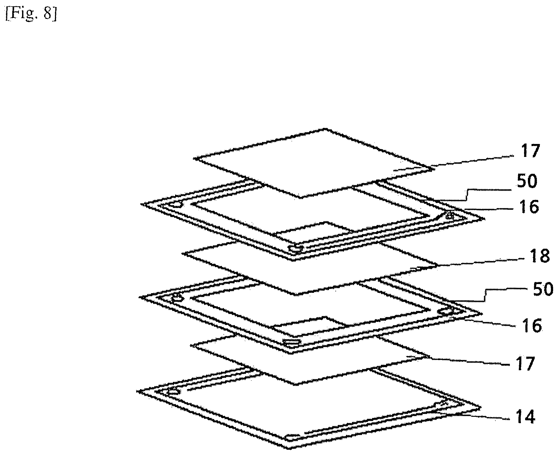

FIG. 8 is a diagram for describing a state in which a seal is stacked, according to the present invention.
FIG. 9 is an assembly diagram of an existing redox flow battery using an existing guide pin.

BEST MODE

Hereinafter, the present invention will be described in more detail with reference to the accompanying drawings.

The accompanying drawings illustrate exemplary forms of the present invention and are provided to describe the present invention in more detail, and the technical scope of the present invention is not limited to the accompanying drawings.

Redox flow battery or fuel cell stacks according to the present invention have a repeatedly stacked structure, and a structure of a stack 1 is simplified and is illustrated in FIG. 2.

As illustrated in FIG. 9, the stack is assembled in a manner of stacking from bottom to top.

During assembling, a seal 50 for preventing leakage of an electrolyte is disposed between plates such as an end plate 11, an insulating plate 12, a current plate 13, a bipolar plate 14, and a flow frame 16, which constitute the stack.

The seal 50 may be a gasket 15 having a plate shape, an O-ring having a circular rubber shape, and a string-shaped gasket having various plane shapes.

The seal 50 is mounted so as to be inserted into a groove formed a plate stacked from top to bottom. Since a size of the groove is equally to or greater than a cross sectional area of the seal 50, before the seal 50 is compressed, the seal 50 is not fit in the groove but is placed in the groove (see FIG. 3).

However, during assembling the stack, some parts of the stack is moved, and while the seal 50 inserted into the groove of the lower surface in the plate is moved together with the plate, there has been inconvenience during assembling due to the separation of the seal 50 from the groove by gravity.

Therefore, in the present invention, the groove is removed from the lower surface of the plate adjacent to the seal 50 and is formed only on an upper surface, and when a portion of the stack is moved, the seal 50 is not allowed to follow the lower surface of the plate, thereby improving efficiency of assembling.

In addition, in the stack according to the present invention, shunt current loss occurs because a resistance value of an electrolyte passage is lower than an internal resistance of a cell, and accordingly, the resistance value of the electrolyte flow channel is increased, the shunt current loss may be prevented. The most commonly used method is a method of lengthening a flow channel longer.

$$R = L/A$$

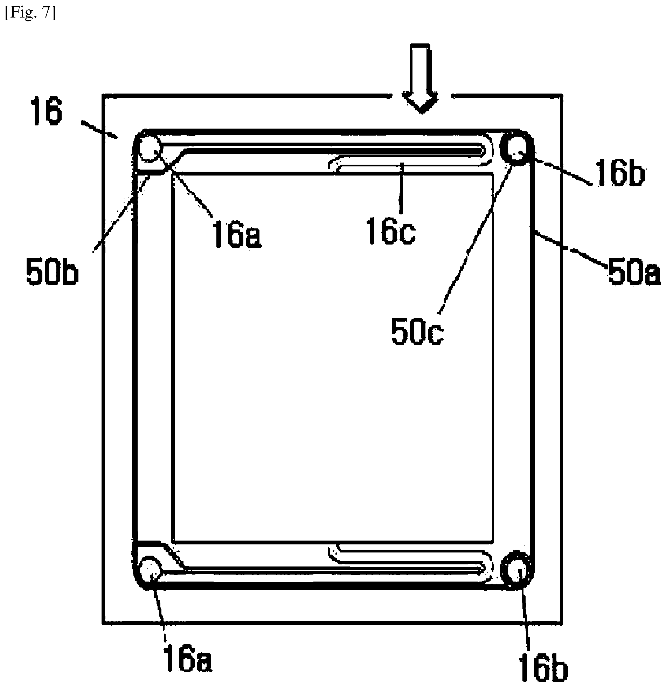

A resistance R is proportional to a length L and is inversely proportional to a cross sectional area A. Therefore, since a resistance is increased by lengthening the length L of the flow channel, in the present invention, the electrolyte flow channel is lengthily formed by forming an electrolyte flow channel 16c from an electrolyte passage 16a to an ion exchange membrane 18 so as to have overlapping portions such as a "ㄹ" shape or an "S" shape when viewed from one direction (arrow direction of FIG. 7).

In the present invention, a method of lengthily forming the electrolyte flow channel 16c includes a method of forming the "ㄹ" shape or the "S" shape as well as other methods of forming modifications that can be easily construed by the technicians in the art.

However, when the electrolyte flow channel 16c having the "ㄹ" shape or the "S" shape is installed, the electrolyte may be directly moved to an area of the ion exchange membrane 18 from the electrolyte passage 16a rather than the electrolyte flow channel 16c as indicated by an arrow (illustrated in FIG. 6), and in this case, a moving path of the electrolyte may be shortened, resulting in reducing the resistance value of the electrolyte passage and generating the shunt current loss.

Therefore, in the present invention, a seal 50b may be further installed adjacent to the electrolyte flow channel and/or between the overlapping portions, thereby preventing the electrolyte from deviating from the electrolyte passage 16a or the electrolyte flow channel 16c to prevent the shunt current loss.

In addition, as illustrated in FIG. 7, the leakage of the electrolyte is prevented by forming a seal 50a surrounding an outside of the plate and forming a seal 50c surrounding an electrolyte passage 16b in which the electrolyte flow channel is not formed.

Furthermore, in the present invention, the electrolyte is prevented from deviating the electrolyte flow channel 16c and is prevented from leaking from the flow frame 16 by integrally forming the seal 50a surrounding the outside of the frame and the seal 50b disposed inside the electrolyte flow channel or integrally forming the seals 50a and 50b and the seal 50c surrounding the electrolyte passage 16b.

While the electrolyte flow channel has been described as an example as being formed in the flow frame 16, the electrolyte flow channel may be formed in other plates rather than the flow frame 16.

**Claims**

1. A redox flow battery stack assembled by stacking a plurality of plates (11, 12, 13, 14, 16), the redox flow battery stack comprising a first electrolyte passage (16a) and an electrolyte flow channel (16c), which are formed in some of the plurality of plates, wherein overlapping portions are formed at the electrolyte flow channel (16c) when viewed from one direction, and **characterized in that** the plates (11, 12, 13, 14, 16) in which the electrolyte flow channel (16c) is formed comprises:

   a first seal (50a) that is disposed along outsides thereof; and
   a second seal (50b) that is disposed adjacent to the electrolyte flow channel (16c) and extends between the overlapping portions such that an electrolyte is prevented from being directly moved from the first electrolyte passage (16a) to an ion exchange membrane and is prevented from deviating from the electrolyte flow channel (16c),
   wherein grooves are formed only on surfaces upward directed at the time of assembling at the plates (11, 12, 13, 14, 16) in which the electrolyte flow channel (16c) is formed, the first and second seals being placed in the grooves, and
   wherein said first and second seals (50) are mounted so as to be inserted into a groove formed on a plate, a size of the groove is equally to or greater than a cross sectional area of the seal (50) and the seals (50) are placed in the groove and compressed.

2. The redox flow battery stack of claim 1, wherein the plates (11, 12, 13, 14, 16) in which the electrolyte flow channel (16c) is formed further comprises:

a second electrolyte passage (16b) in which the electrolyte flow channel (16c) is not formed; and a third seal (50c) surrounding the second electrolyte passage (16b), and the electrolyte flow channel (16c) has a "己" shape or an "S" shape.

**3.** The redox flow battery stack of claim 1 or 2, wherein the first seal disposed along the outsides of the plates (11, 12, 13, 14, 16) and the second seal adjacent to the electrolyte flow channel (16c) are integrally formed, or wherein the first seal disposed along the outsides of the plates (11, 12, 13, 14, 16), the second seal adjacent to the electrolyte flow channel (16c), and the third seal surrounding the electrolyte passage are integrally formed.

## Patentansprüche

**1.** Redox-Flow-Batteriestapel, der durch Stapeln einer Vielzahl von Platten (11, 12, 13, 14, 16) zusammengebaut ist, wobei der Redox-Flow-Batteriestapel einen ersten Elektrolytdurchgang (16a) und einen Elektrolytströmungskanal (16c) umfasst, die in einigen der Vielzahl der Platten gebildet sind,

wobei an dem Elektrolytströmungskanal (16c) bei Betrachtung aus einer Richtung überlappende Abschnitte gebildet sind, und **dadurch gekennzeichnet, dass** die Platten (11, 12, 13, 14, 16), in denen der Elektrolytströmungskanal (16c) gebildet ist, umfassen:

eine erste Dichtung (50a), die entlang ihren Außenseiten angeordnet ist; und eine zweite Dichtung (50b), die angrenzend an den Elektrolytströmungskanal (16c) angeordnet ist und sich zwischen den überlappenden Abschnitten derart erstreckt, das ein Elektrolyt daran gehindert wird, direkt von dem ersten Elektrolytdurchgang (16a) zu einer Ionenaustauschmembran bewegt zu werden, und daran gehindert wird, von dem Elektrolytströmungskanal (16c) abzuweichen,

wobei nur an nach oben gerichteten Oberflächen zum Zeitpunkt des Zusammenbauens Nuten an den Platten (11, 12, 13, 14, 16) gebildet werden, in denen der Elektrolytströmungskanal (16c) gebildet ist, wobei die erste und die zweite Dichtung in den Nuten platziert werden, und wobei die erste und die zweite Dichtung (50) in eine an einer Platte gebildete Nut eingefügt angebracht sind, eine Größe der Nut gleich einem Querschnittsbereich der Dichtung (50) oder größer als dieser ist und die Dichtungen (50) in der Nut platziert und komprimiert sind.

**2.** Redox-Flow-Batteriestapel nach Anspruch 1, wobei die Platten (11, 12, 13, 14, 16), in denen der Elektrolytströmungskanal (16c) gebildet ist, ferner umfassen:

einen zweiten Elektrolytdurchgang (16b), in dem der Elektrolytströmungskanal (16c) nicht gebildet ist; und eine dritte Dichtung (50c), die den zweiten Elektrolytdurchgang (16b) umgibt, und der Elektrolytströmungskanal (16c) eine "己"-Form oder eine "S"-Form aufweist.

**3.** Redox-Flow-Batteriestapel nach Anspruch 1 oder 2, wobei die entlang der Außenseiten der Platten (11, 12, 13, 14, 16) angeordnete erste Dichtung und die an den Elektrolytströmungskanal (16c) angrenzende zweite Dichtung einstückig ausgebildet sind, oder wobei die entlang der Außenseiten der Platten (11, 12, 13, 14, 16) angeordnete erste Dichtung, die an den Elektrolytströmungskanal (16c) angrenzende zweite Dichtung und die den Elektrolytdurchgang umgebende dritte Dichtung einstückig ausgebildet sind.

## Revendications

**1.** Empilement de batteries à flux redox assemblé en empilant une pluralité de plaques (11, 12, 13, 14, 16), l'empilement de batteries à flux redox comprenant un premier passage pour électrolytes (16a) et un canal pour flux d'électrolytes (16c), qui sont formés dans certaines parmi la pluralité de plaques,

- où des parties chevauchantes sont formées au niveau du canal pour flux d'électrolytes (16c) quand elles sont vues selon une direction, et **caractérisé en ce que** les plaques (11, 12, 13, 14, 16) dans lesquelles le canal pour flux d'électrolytes (16c) est formé comprennent :

- un premier joint (50a) qui est placé le long de leurs extérieurs, et - un deuxième joint (50b) qui est disposé adjacent au canal pour flux d'électrolytes (16c) et s'étend entre les parties chevauchantes si bien qu'il empêche tout électrolyte de se déplacer directement du premier passage pour électrolytes (16a) à une membrane échangeuse d'ions et de dévier du canal pour flux d'électrolytes (16c),

- où des rainures sont formées uniquement sur des surfaces dirigées vers l'amont au moment de l'assemblage des plaques (11, 12, 13, 14, 16) dans lesquelles le canal pour flux d'électrolytes (16c) est formé, le premier et deuxième joints étant placés dans les rainures, et

- où les dits premiers et deuxièmes joints (50) sont montés de manière à être insérés dans une rainure formée sur une plaque, une taille de la rainure est supérieure ou égale à une surface de section transversale du joint (50) et les joints (50) sont placés dans la rainure et comprimés.

2. Empilement de batteries à flux redox selon la revendication 1, **caractérisé en ce que** les plaques (11, 12, 13, 14, 16) dans lesquelles le canal pour flux d'électrolytes (16c) est formé comprennent en outre :

    - un deuxième passage pour électrolytes (16b) dans lequel le canal pour flux d'électrolytes (16c) n'est pas formé, et
    - un troisième joint (50c) entourant le deuxième passage pour électrolytes (16b), et
    - le canal pour flux d'électrolytes (16c) a une forme de « 2 » ou une forme de « S ».

3. Empilement de batteries à flux redox selon la revendication 1 ou 2, **caractérisé en ce que** le premier joint placé le long de l'extérieur des plaques (11, 12, 13, 14, 16) et le deuxième joint adjacent au canal à flux pour électrolytes (16c) sont formés solidaires, ou **en ce que** le premier joint placé le long de l'extérieur des plaques (11, 12, 13, 14, 16), le deuxième joint adjacent au canal pour flux d'électrolytes (16c) et le troisième joint entourant le passage pour électrolytes sont formés solidaires.

[Fig. 1]

[Fig. 2]

[Fig. 3]

[Fig. 4]

[Fig. 5]

[Fig. 6]

[Fig. 7]

[Fig. 8]

[Fig. 9]

30

**EP 3 024 075 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130040826